# EUROPÄISCHE PATENTSCHRIFT

(11) **EP 3 659 419 B1**
(45) Veröffentlichungstag und Bekanntmachung des Hinweises auf die Patenterteilung: **18.09.2024**
(21) Anmeldenummer: 19401047.6
(22) Anmeldetag: 14.11.2019
(51) Int. Cl.: A01C 17/00, A01C 21/00

(54) **VERFAHREN ZUM AUSBRINGEN VON AUSBRINGMATERIAL**
METHOD FOR DISTRIBUTING MATERIAL
PROCÉDÉ DE DISTRIBUTION DE MATÉRIAU

(30) Priorität: 29.11.2018 DE 102018130248
(43) Veröffentlichungstag der Anmeldung: 03.06.2020
(73) Patentinhaber: Amazonen-Werke H. Dreyer SE & Co. KG, 49205 Hasbergen (DE)
(72) Erfinder: Johannaber, Stefan Jan, 49536 Lienen (DE); Kleine-Hartlage, Hubertus, 49186 Bad Iburg (DE); Rahe, Florian, 49504 Lotte (DE); Albert, Jörn, 49080 Osnabrück (DE)

(56) Entgegenhaltungen:
- EP-A1- 3 195 713
- EP-A1- 3 326 442
- DE-A1- 102016 122 946

## Beschreibung

Die Erfindung betrifft ein Verfahren zum Ausbringen von Ausbringmaterial nach dem Oberbegriff des Patentanspruchs 1.

Beim Ausbringen von Ausbringmaterial auf eine landwirtschaftliche Nutzfläche ist es notwendig, vor oder während des Ausbringvorgangs geeignete Ausbringeinstellungen für das landwirtschaftliche Ausbringgerät zu ermitteln. Dabei sind landwirtschaftliche Ausbringgeräte bekannt, welche ihre Ausbringeinstellungen während des Ausbringsvorgangs zum Anpassen der Materialausbringungen selbstständig anpassen können.

In diesem Zusammenhang ist beispielsweise die selbsttätige Korrektur des Abwurfwinkels bei Düngerstreuern bekannt, wenn der eingestellte Aufgabepunkt des Streuguts auf die Verteilscheibe nicht zur Umsetzung des gewünschten Abwurfwinkels führt, wie beispielsweise in EP 3 195 713 A1 oder EP 3 326 442 A1 offenbart.

Insbesondere im Übergangsbereich zwischen dem Vorgewende und dem feldinneren Bereich der landwirtschaftlichen Nutzfläche ist eine präzise Ausbringung von Material bisher nicht möglich. Fehlausbringungen in diesem Übergangsbereich lassen sich bisher nicht vermeiden.

Die der Erfindung zugrundeliegende Aufgabe besteht somit darin, die Ausbringpräzision im Übergangsbereich zwischen dem Vorgewende und dem feldinneren Bereich der landwirtschaftlichen Nutzfläche zu erhöhen.

Die Aufgabe wird gelöst durch ein Verfahren der eingangs genannten Art, wobei beim Ermitteln der Ausbringeinstellungen für das landwirtschaftliche Ausbringgerät das sich beim Einfahren in eine und/oder Ausfahren aus einer Vorgewendefahrspur ergebende Ausschwenken des landwirtschaftlichen Ausbringgeräts nach außen berücksichtigt wird.

Die Erfindung macht sich die Erkenntnis zunutze, dass angebaute und/oder angehangene Ausbringgeräte beim Befahren von Kurvenabschnitten nicht exakt der Fahrspur folgen, sondern seitlich ausschwenken.

Das seitliche Ausschwenken erfolgt zur Kurvenaußenseite. Das seitliche Ausschwenken führt zu einer Fehlausbringung im Bereich des Kurvenabschnitts, sodass die Ausbringpräzision erheblich beeinträchtigt wird. Übliche Fahrspurensysteme weisen entsprechende Kurvenabschnitte insbesondere im Übergangsbereich zwischen dem Vorgewende und dem feldinneren Bereich der landwirtschaftlichen Nutzfläche auf, sodass es insbesondere in diesem Bereich durch das erfindungsgemäße Verfahren zu einer erheblichen Verbesserung der Ausbringpräzision kommt.

Das Ausbringmaterial ist vorzugsweise als Streugut ausgebildet, beispielsweise als Dünger. Die Materialausbringung ist vorzugsweise eine Streugutausbringung, insbesondere eine Düngerausbringung. Der Ausbringvorgang ist demnach vorzugsweise ein Streuvorgang, insbesondere ein Düngungsvorgang. Das Ermitteln von Ausbringeinstellungen für das landwirtschaftliche Ausbringgerät erfolgt durch eine Berechnungseinrichtung. Die Berechnungseinrichtung kann Bestandteil des landwirtschaftlichen Ausbringgeräts und/oder eines geräteexternen Berechnungscomputers sein. Das selbsttätige Anpassen der Materialausbringung erfolgt durch das landwirtschaftliche Ausbringgerät selbst.

Im erfindungsgemäßen Verfahren umfasst das Ermitteln der Ausbringeinstellungen für das landwirtschaftliche Ausbringgerät das Empfangen von Fahrspurinformationen zu einem vorherigen Ausbringvorgang auf der landwirtschaftlichen Nutzfläche und/oder das Erfassen eines zu berücksichtigenden Fahrspurensystems auf der landwirtschaftlichen Nutzfläche. Alternativ oder zusätzlich umfasst das Ermitteln der Ausbringeinstellungen für das landwirtschaftliche Ausbringgerät das Identifizieren von Vorgewendefahrspuren innerhalb des zu berücksichtigenden Fahrspurensystems auf der landwirtschaftlichen Nutzfläche und/oder das Identifizieren von feldinneren Fahrspuren innerhalb des zu berücksichtigenden Fahrspurensystems auf der landwirtschaftlichen Nutzfläche. Die Vorgewendefahrspuren können insbesondere stirnseitige und/oder seitliche Vorgewendefahrspuren sein. Bei dem vorherigen Ausbringvorgang handelt es sich vorzugsweise um einen bereits abgeschlossenen Sävorgang, bei welchem ein Fahrspurensystem angelegt wurde. Das Empfangen von Fahrspurinformationen zu dem vorherigen Ausbringvorgang auf der landwirtschaftlichen Nutzfläche kann durch ein Abrufen der Fahrspurinformationen durch eine Berechnungseinrichtung von einer zentralen Datenbank, insbesondere einem Cloud-Speicher, erfolgen. Die Berechnungseinrichtung kann Bestandteil des landwirtschaftlichen Ausbringgeräts und/oder eines geräteexternen Berechnungscomputers sein. Das Identifizieren der Vorgewendefahrspuren und/oder das Identifizieren von feldinneren Fahrspuren kann eine Untersuchung umfassen, ob einzelne Fahrspuren innerhalb eines Vorgewendebereichs angeordnet sind.

Das erfindungsgemäße Verfahren wird ferner dadurch vorteilhaft weitergebildet, dass das Ermitteln der Ausbringeinstellungen für das landwirtschaftliche Ausbringgerät das Ermitteln von kurvigen Einfahrbereichen in eine Vorgewendefahrspur, innerhalb welcher das landwirtschaftliche Ausbringgerät nach außen ausschwenkt, und/oder das Ermitteln von kurvigen Ausfahrbereichen aus einer Vorgewendefahrspur, innerhalb welcher das landwirtschaftliche Ausbringgerät nach außen ausschwenkt, umfasst. Die Vorgewendefahrspuren können dabei stirnseitige oder seitliche Vorgewendefahrspuren sein. Insbesondere, wenn das Ausbringgerät als angebautes oder angehangenes Streugerät ausgebildet ist, schwenkt dieses beim Befahren von kurvigen Einfahrbereichen und kurvigen Ausfahrbereichen in eine bzw. aus einer Vorgewendefahrspur nach außen aus. Kurvige Einfahrbereiche in eine Vorgewendefahrspur und kurvige Ausfahrbereiche aus einer Vorgewendefahrspur ergeben sich, wenn die entsprechende Vorgewendefahrspur schräg zu den feldinneren Fahrspuren verläuft.

In einer weiteren Ausführungsform des erfindungsgemäßen Verfahrens umfasst das Ermitteln der Ausbringeinstellungen für das landwirtschaftliche Ausbringgerät das Ermitteln der Fahrspurradien innerhalb der Einfahrbereiche und/oder Ausfahrbereiche und/oder das Ermitteln des zu erwartenden Ausschwenkverhaltens des landwirtschaftlichen Ausbringgeräts innerhalb der ermittelten Einfahrbereiche und/oder Ausfahrbereiche. Das Ausschwenkverhalten ist unter anderem abhängig von den Gerätemaßen, der Gerätekonstruktion und der Kurvengeometrie. Das Maß der Ausschwenkung nimmt mit steigender Kurvenschärfe im Einfahrbereich bzw. Ausfahrbereich zu. Somit ergeben sich besonders in Bereichen mit einer hohen Kurvenschärfe vergleichsweise hohe Fehlausbringungen, sodass die Ausbringpräzision in diesen Bereichen mittels des erfindungsgemäßen Verfahrens erheblich verbessert wird.

In einer anderen Ausführungsform des erfindungsgemäßen Verfahrens umfasst das Ermitteln der Ausbringeinstellungen für das landwirtschaftliche Ausbringgerät das Ermitteln des potentiellen Bewegungspfads des landwirtschaftlichen Ausbringgeräts auf der landwirtschaftlichen Nutzfläche. Das Ermitteln des potentiellen Bewegungspfads des landwirtschaftlichen Ausbringgeräts erfolgt vorzugsweise auf Grundlage eines zu berücksichtigenden Fahrspurensystems auf der landwirtschaftlichen Nutzfläche und/oder dem Ausschwenkverhalten des landwirtschaftlichen Ausbringgeräts. Der Bewegungspfad einer Vielzahl von landwirtschaftlichen Ausbringgeräten unterscheidet sich nicht unerheblich von dem Verlauf der Fahrspuren des Träger- oder Zugfahrzeugs.

In einer bevorzugten Weiterbildung des erfindungsgemäßen Verfahrens werden beim Ermitteln der Ausbringeinstellung für das landwirtschaftliche Ausbringgerät die sich beim Einfahren in eine und/oder beim Ausfahren aus einer Vorgewendefahrspur jenseits der eingestellten Ausbringbreite ergebenden Ausbringlücken berücksichtigt. Da die feldinternen Fahrspuren nicht gradlinig über die Vorgewendefahrspuren hinweglaufen, sondern in diese über einen gebogenen Abschnitt einmünden, entstehen an den Vorgewendefahrspuren Ausbringlücken, welche sich keilförmig in das Feldinnere erstrecken. Zum Vermeiden entsprechender Ausbringlücken kann beispielsweise die Arbeitsbreite und/oder die Wurfrichtung des abgeworfenen Ausbringmaterials beim Einfahren in eine und/oder beim Ausfahren aus einer Vorgewendefahrspur verändert werden. Dies kann beispielsweise durch eine Anpassung der Drehzahl der Verteilscheiben des landwirtschaftlichen Ausbringgeräts und/oder durch eine Anpassung des Aufgabepunkts des auf die Verteilscheiben des landwirtschaftlichen Ausbringgeräts aufgegebenen Ausbringmaterials umgesetzt werden.

In einer weiteren Ausführungsform des erfindungsgemäßen Verfahrens erfolgt das selbsttätige Anpassen der Materialausbringung während des Ausbringvorgangs auf der landwirtschaftlichen Nutzfläche beim Durchfahren einer Vorgewendefahrspur und/oder einer feldinneren Fahrspur. Alternativ oder zusätzlich wird beim selbsttätigen Anpassen der Materialausbringung während des Ausbringvorgangs auf der landwirtschaftlichen Nutzfläche die Position der Vorgewendefahrspuren und/oder der feldinneren Fahrspuren berücksichtigt.

Durch das Anpassen der Materialausbringung beim Durchfahren einer Vorgewendefahrspur und/oder eines vorgewendenahen Bereichs einer feldinneren Fahrspur kann eine entsprechende Korrektur der Materialausbringung im Übergangsbereich zwischen dem Vorgewende und dem feldinneren Bereich der landwirtschaftlichen Nutzfläche realisiert werden, sodass auf diese Weise die Ausbringpräzision in diesem Übergangsbereich erhöht wird.

In einer Weiterbildung des erfindungsgemäßen Verfahrens umfasst das selbsttätige Anpassen der Materialausbringung während des Ausbringvorgangs auf der landwirtschaftlichen Nutzfläche das selbsttätige Anpassen der Arbeitsbreite des landwirtschaftlichen Ausbringgeräts, das selbsttätige Anpassen der Querverteilung des Ausbringmaterials, das selbsttätige Anpassen der Längsverteilung des Ausbringmaterials, das selbsttätige Anpassen der Ausbringrate des Ausbringmaterials und/oder das selbsttätige Schalten von Teilbreiten einer Teilbreitenschaltung des landwirtschaftlichen Ausbringgeräts. Die Arbeitsbreite des landwirtschaftlichen Ausbringgeräts kann über eine Veränderung des Aufgabepunkts des Ausbringmaterials auf die Verteilscheiben des landwirtschaftlichen Ausbringgeräts und/oder über eine Veränderung der Drehzahl der Verteilscheiben des landwirtschaftlichen Ausbringgeräts angepasst werden. Entsprechend kann durch das Anpassen des Aufgabepunktes und der Drehzahl auch die Querverteilung des Ausbringmaterials angepasst werden. Das Anpassen der Ausbringrate des Ausbringmaterials kann beispielsweise durch eine Veränderung der Durchflussmenge des Ausbringmaterials innerhalb des landwirtschaftlichen Ausbringgeräts angepasst werden. Dies erfolgt beispielsweise durch eine Veränderung eines Kalibrierungsfaktors.

Das erfindungsgemäße Verfahren wird ferner dadurch vorteilhaft weitergebildet, dass das selbsttätige Anpassen der Materialausbringung während des Ausbringvorgangs auf der landwirtschaftlichen Nutzfläche ein aktives Bewegen des landwirtschaftlichen Ausbringgeräts beim Einfahren in eine und/oder Ausfahren aus einer Vorgewendefahrspur nach innen zum zumindest teilweisen Ausgleich der Ausschwenkbewegung des landwirtschaftlichen Ausbringgeräts nach außen umfasst. Alternativ oder zusätzlich umfasst das selbsttätige Anpassen der Materialausbringung während des Ausbringvorgangs auf der landwirtschaftlichen Nutzfläche ein aktives Bewegen von Teilen des landwirtschaftlichen Ausbringgeräts beim Einfahren in eine und/oder Ausfahren aus einer Vorgewendefahrspur nach innen zum zumindest teilweisen Ausgleich der Ausschwenkbewegung des landwirtschaftlichen Ausbringgeräts nach außen. Beispielsweise kann selbsttätig eine Gegenbewegung beim Einfahren in eine und/oder Ausfahren aus einer Vorgewendefahrspur durch das landwirtschaftliche Ausbringgerät ausgeführt werden, welche das Ausschwenken nach außen verringert oder sogar aufhebt.

In einer anderen Ausführungsform des erfindungsgemäßen Verfahrens werden Positionsdaten während eines vorherigen Ausbringvorgangs ermitteln und/oder aufgezeichnet, Fahrspurinformation auf Grundlage der ermittelten und/oder aufgezeichneten Positionsdaten erstellt und/oder einzelne Fahrspuren als Vorgewendefahrspuren und/oder feldinnere Fahrspuren gekennzeichnet. Die Vorgewendefahrspuren können dabei stirnseitige oder seitliche Vorgewendefahrspuren sein und vorzugsweise auch als solche gekennzeichnet sein. Der vorherige Ausbringvorgang ist vorzugsweise ein Sävorgang, welcher von einer Sämaschine auf der landwirtschaftlichen Nutzfläche ausgeführt wurde. Alternativ oder zusätzlich können einzelne Fahrspuren auch über eine Bedieneinheit von einem Benutzer als Vorgewendefahrspuren oder feldinnere Fahrspuren gekennzeichnet werden. Die Bedieneinheit kann beispielsweise ein Bedienterminal der Sämaschine, ein Bedienterminal des landwirtschaftlichen Ausbringgeräts, ein Bedienterminal eines Träger- oder Zugfahrzeugs oder ein mobiles Endgerät, insbesondere ein Smartphone oder Tablet, sein. Die Fahrspureninformationen können Angaben zu einem zukünftig zu berücksichtigenden Fahrspurensystem umfassen. Im Rahmen des Verfahrens kann aufgezeichnet werden, ob eine Materialausbringung beim Befahren der landwirtschaftlichen Nutzfläche während des vorherigen Ausbringvorgangs erfolgt ist oder ob die Materialausbringung unterbrochen war. Wenn der vorherige Ausbringvorgang somit einen Sävorgang betrifft, kann auf diese Weise ein angelegtes Fahrspurensystem ermittelt werden. Das Erstellen von Fahrspurinformationen und/oder das Kennzeichnen von einzelnen Fahrspuren als Vorgewendefahrspuren und/oder feldinnere Fahrspuren kann auch automatisch über eine Berechnungseinrichtung erfolgen. Die Berechnungseinrichtung kann Bestandteil des landwirtschaftlichen Ausbringgeräts und/oder eines geräteexternen Berechnungscomputers sein.

In einer Weiterbildung des erfindungsgemäßen Verfahrens werden die Positionsdaten von einer Sämaschine während des Anlegens eines Fahrspurensystems ermittelt und/oder aufgezeichnet. Wenn das landwirtschaftliche Ausbringgerät also als Streugerät ausgebildet ist, kann die Streugutausbringung unter Berücksichtigung des von der Sämaschine angelegten Fahrspurensystems im Übergangsbereich zwischen dem Vorgewende und dem feldinneren Bereich der landwirtschaftlichen Nutzfläche angepasst werden.

Außerdem ist ein erfindungsgemäßes Verfahren bevorzugt, bei welchem die ermittelten und/oder aufgezeichneten Positionsdaten zu dem vorherigen Ausbringvorgang an eine zentrale Datenbank gesendet werden und/oder die erstellten Fahrspurinformation zu dem vorherigen Ausbringvorgang an eine zentrale Datenbank gesendet werden. Die zentrale Datenbank kann Bestandteil eines Cloud-Speichers sein. Die zentrale Datenbank kann Bestandteil eines Farm-Management-Systems sein.

Das Senden der ermittelten und/oder aufgezeichneten Positionsdaten und/oder das Senden der erstellten Fahrspurinformation erfolgt vorzugsweise kabellos, insbesondere über Funk. Bei der Funkübertragung kann beispielsweise ein Mobilfunknetz verwendet werden.

Es wird ferner ein landwirtschaftliches Ausbringgerät angegeben, wobei das Ausbringgerät dazu eingerichtet ist, das Verfahren zum Ausbringen von Ausbringmaterial auf eine landwirtschaftliche Nutzfläche nach einer der vorstehend beschriebenen Ausführungsformen auszuführen. Hinsichtlich der Vorteile und Modifikationen des landwirtschaftlichen Ausbringgeräts wird zunächst auf die Vorteile und Modifikationen des erfindungsgemäßen Verfahrens verwiesen.

Das landwirtschaftliche Ausbringgerät kann ein Düngerstreuer sein. Die zumindest einer Materialausbringeinrichtung des erfindungsgemäßen landwirtschaftlichen Ausbringgeräts kann eine rotierend antreibbare Verteilscheibe sein.

Insbesondere erfolgt die Umsetzung des Verfahrens durch Ausnutzung eines Ausbringsystems mit einer Berechnungseinrichtung, einer Datenbank, einem ersten landwirtschaftlichen Ausbringgerät und einem zweiten landwirtschaftlichen Ausbringgerät. Das erste landwirtschaftliche Ausbringgerät ist vorzugsweise eine Sämaschine, wobei das zweite landwirtschaftliche Ausbringgerät vorzugsweise als Düngerstreuer ausgebildet ist.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen landwirtschaftlichen Ausbringgeräts während des Ausführens des erfindungsgemäßen Verfahrens;
- Fig. 2: ein weiteres Ausführungsbeispiel des erfindungsgemäßen landwirtschaftlichen Ausbringgeräts während des Ausführens des erfindungsgemäßen Verfahrens; und
- Fig. 3: eine schematische Darstellung einer landwirtschaftlichen Nutzfläche in einer Draufsicht.

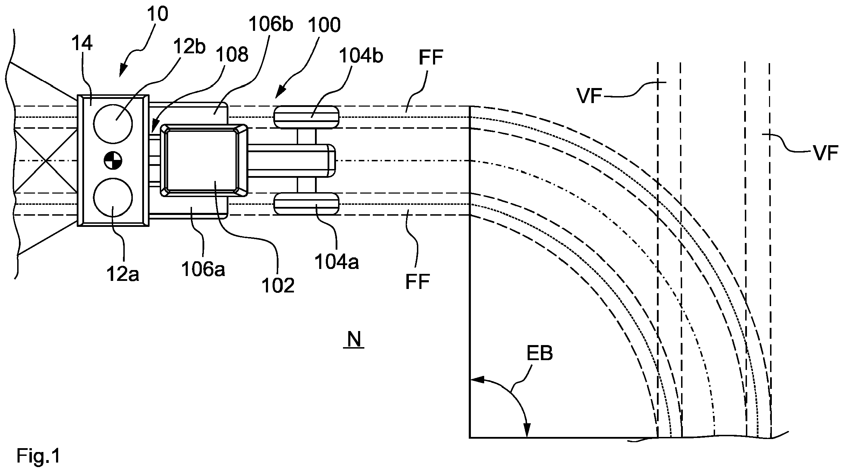

Gemäß der Fig. 1 ist das landwirtschaftliche Ausbringgerät 10 als Düngerstreuer ausgebildet und weist zwei nebeneinander angeordnete und rotierend antreibbare Verteilscheiben 12a, 12b auf. Oberhalb der Verteilscheiben 12a, 12b ist ein Vorratsbehälter 14 zum Bevorraten des auszubringenden Streuguts, also des auszubringenden Düngers, angeordnet. Zwischen dem Vorratsbehälter 14 und den Verteilscheiben 12a, 12b ist ein Streuguteinleitsystem angeordnet, mittels welchem das Streugut in einstellbaren Mengen den Verteilscheiben zuführbar ist und der Aufgabepunkt des Ausbringmaterials auf die Verteilscheiben 12a, 12b angepasst werden kann. Durch eine derartige Anpassung kann eine Veränderung des Abwurfwinkels vorgenommen werden. Darüber hinaus umfasst das landwirtschaftliche Ausbringgerät 10 eine nicht dargestellte Steuerungseinrichtung, über welche die Aufgabepunkte des Ausbringmaterials auf die Verteilscheiben 12a, 12b sowie die Drehzahl der Verteilscheiben 12a, 12b einstellbar sind.

Das landwirtschaftliche Ausbringgerät 10 ist über die Aufhängung 108 mit einem Traktor 100 gekoppelt. Der Traktor 100 weist eine Fahrerkabine 102, Vorderräder 104a, 104b und Hinterräder 106a, 106b auf.

Der Traktor 100 und das Ausbringgerät 10 befahren eine feldinnere Fahrspur FF und bewegen sich in Richtung einer Vorgewendefahrspur VF. Zwischen der feldinneren Fahrspur FF und der Vorgewendefahrspur VF ist ein kurviger Einfahrbereich EB angeordnet, über welchen der Traktor 100 und das Ausbringgerät 10 von der feldinneren Fahrspur FF in die Vorgewendefahrspur VF einbiegen.

Das landwirtschaftliche Ausbringgerät 10 ist dazu eingerichtet, geeignete Ausbringeinstellungen zum Anpassen der Materialausbringung während des Ausbringvorgangs zu ermitteln. Beim Ermitteln der Ausbringeinstellungen berücksichtigt das landwirtschaftliche Ausbringgerät 10 das sich beim Einfahren in eine und/oder Ausfahren aus einer Vorgewendefahrspur VF ergebende Ausschwenken des landwirtschaftlichen Ausbringgeräts 10 nach außen.

Damit eine entsprechende Ermittlung geeigneter Ausbringeinstellungen erfolgen kann, empfängt das landwirtschaftliche Ausbringgerät 10 Fahrspurinformationen zu einem vorherigen Ausbringvorgang auf der landwirtschaftlichen Nutzfläche N, welche während der Anlage eines Fahrspurensystems FS durch eine Sämaschine aufgezeichnet wurden. Auf diese Weise ist das landwirtschaftliche Ausbringgerät 10 dazu in der Lage, dass zu berücksichtigende Fahrspurensystem FS auf der landwirtschaftlichen Nutzfläche N zu erfassen.

Auf Grundlage des Fahrspurensystems FS können Vorgewendefahrspuren VF und feldinnere Fahrspuren FF identifiziert werden. Die Vorgewendefahrspuren VF können dabei beispielsweise stirnseitige und/oder seitliche Vorgewendefahrspuren VF sein. Beispielsweise ruft das landwirtschaftliche Ausbringgerät 10 die Fahrspurinformationen von einer zentralen Datenbank, beispielsweise einem Cloud-Speicher, ab. Das Erfassen des zu berücksichtigenden Fahrspurensystems FS sowie das Identifizieren von Vorgewendefahrspuren VF und feldinneren Fahrspuren FF kann alternativ auch durch einen geräteexternen Berechnungscomputer erfolgen.

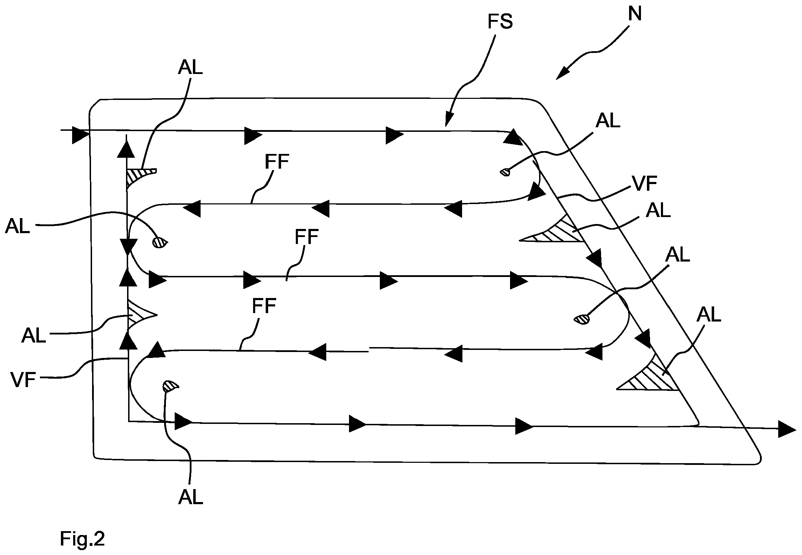

Die Fig. 2 zeigt, dass neben den kurvigen Einfahrbereichen EB in eine Vorgewendefahrspur VF üblicherweise auch kurvige Ausfahrbereiche AB aus einer Vorgewendefahrspur VF vorliegen. Das landwirtschaftliche Ausbringgerät 10 schwenkt sowohl während dem Befahren von Einfahrbereichen EB als auch während dem Befahren von Ausfahrbereichen AB nach außen aus, sodass eine Anpassung der Materialausbringung in beiden Bereichen notwendig ist. Das landwirtschaftliche Ausbringgerät 10 ist dazu eingerichtet, zum Ermitteln geeigneter Ausbringeinstellungen die Fahrspurradien innerhalb der Einfahrbereiche EB und Ausfahrbereiche AB zu ermitteln. Auf Grundlage der ermittelten Fahrspurradien kann dann das erwartete Ausschwenkverhalten des landwirtschaftlichen Ausbringgeräts 10 innerhalb der Einfahrbereiche EB und der Ausfahrbereiche AB berechnet werden.

Auf Grundlage der vorliegenden Fahrspurinformationen kann auch der potentielle Bewegungspfad des landwirtschaftlichen Ausbringgeräts 10 auf der landwirtschaftlichen Nutzfläche N ermittelt werden. Das Ermitteln des potentiellen Bewegungspfads des landwirtschaftlichen Ausbringgeräts 10 erfolgt dabei auf Grundlage des zu berücksichtigenden Fahrspurensystems FS auf der landwirtschaftliche Nutzfläche N und dem Ausschwenkverhalten des landwirtschaftlichen Ausbringgeräts 10 bei Kurvenfahren.

Die Fehlausbringungen im Übergangsbereich zwischen den feldinneren Bereichen der landwirtschaftlichen Nutzfläche N und dem Vorgewende werden durch ein selbsttätiges Anpassen der Materialausbringung während des Ausbringvorgangs auf der landwirtschaftlichen Nutzfläche N beim Durchfahren der Einfahrbereiche EB, der Ausfahrbereiche AB sowie der Vorgewendefahrspuren VF reduziert. Das selbsttätige Anpassen der Materialausbringung kann dabei beispielsweise das Anpassen der Arbeitsbreite des landwirtschaftlichen Ausbringgeräts 10, das Anpassen des Abwurfwinkels des Ausbringmaterials und/oder das Anpassen der Ausbringrate des Ausbringmaterials umfassen. Wenn das landwirtschaftliche Ausbringgerät 10 über eine Teilbreitenschaltung verfügt, kann das selbsttätige Anpassen der Materialausbringung beim Durchfahren der Einfahrbereiche EB, der Ausfahrbereiche AB oder der Vorgewendefahrspuren VF auch das selbsttätige Schalten von Teilbreiten der Teilbreitenschaltung umfassen. Zum selbsttätigen Anpassen der Arbeitsbreite und des Abwurfwinkels kann beispielsweise der Aufgabepunkt des Ausbringmaterials auf die Verteilscheiben 12a, 12b und die Drehzahl der Verteilscheiben 12a, 12b angepasst werden.

Alternativ oder zusätzlich kann sich das landwirtschaftliche Ausbringgerät 10 oder können sich Teile des landwirtschaftlichen Ausbringgeräts 10 beim Einfahren in eine und/oder Ausfahren aus einer Vorgewendefahrspur VF aktiv nach innen bewegen, sodass die Ausschwenkbewegung des landwirtschaftlichen Ausbringgeräts 10 zumindest teilweise ausgeglichen wird.

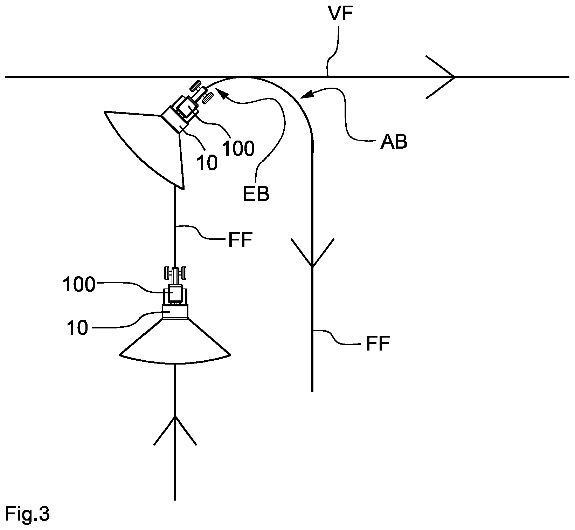

Die Fig. 3 zeigt ein Fahrspurensystem FS, welches auf einer landwirtschaftlichen Nutzfläche N angelegt wurde. Die Anlage erfolgte während einer Saatgutausbringung mittels einer Sämaschine. Durch ein Ermitteln und Aufzeichnen von Positionsdaten während des Sävorgangs durch die Sämaschine werden Fahrspurinformationen erzeugt, welche landwirtschaftliche Ausbringgeräte 10, wie etwa Düngerstreuer, dann später beim Ausbringen von Ausbringmaterial auf die landwirtschaftliche Nutzfläche N zur Reduzierung der Fehlausbringung im Übergangsbereich zwischen dem Feldinneren und dem Vorgewende nutzen können.

Die von der Sämaschine während des Sävorgangs erfassten und aufgezeichneten Positionsdaten werden von der Sämaschine an eine zentrale Datenbank gesendet. Die zentrale Datenbank kann dabei beispielsweise Bestandteil eines Cloud-Speichers und/oder Bestandteil eines Farm-Management-Systems sein. Bei späteren Materialausbringungen können diese Positionsdaten dann abgerufen und zur Verbesserung der Ausbringpräzision verwendet werden.

Das dargestellte Fahrspurensystem FS umfasst mehrere im Wesentlichen parallel verlaufende feldinnere Fahrspuren FF. Seitlich und stirnseitig der feldinneren Fahrspuren FF wurden Vorgewendefahrspuren VF während des Sävorgangs angelegt. Ohne eine entsprechende Anpassung der Materialausbringung des landwirtschaftlichen Ausbringgeräts 10 ergeben sich beim Einfahren in eine und/oder Ausfahren aus einer Vorgewendefahrspur VF Fehlausbringungen. Die Fehlausbringungen ergeben sich beispielsweise im Kurveninneren, da das landwirtschaftliche Ausbringgerät 10 beim Befahren von kurvigen Abschnitten nach außen ausschwenkt. Demnach sind die kurveninneren Fehlausbringungen üblicherweise Ausbringlücken AL, innerhalb welcher kein Ausbringmaterial oder eine zu geringe Menge Ausbringmaterial ausgebracht wird, wenn keine entsprechende Anpassung der Materialausbringung erfolgt. Darüber hinaus ergeben sich Ausbringlücken AL in den kurvenäußeren Bereichen. Diese Ausbringlücken AL erstrecken sich keilförmig von den Vorgewendefahrspuren VF in das Feldinnere. Durch eine entsprechende Anpassung der Materialausbringung im Übergangsbereich zwischen dem Feldinneren und dem Vorgewende lassen sich auch diese Fehlausbringungen reduzieren oder sogar vermeiden.

### Bezugszeichen

- 10: Ausbringgerät
- 12a, 12b: Verteilscheiben
- 14: Vorratsbehälter
- 100: Traktor
- 102: Fahrerkabine
- 104a, 104b: Vorderräder
- 106a, 106b: Hinterräder
- 108: Aufhängung
- N: Nutzfläche
- FF: feldinnere Fahrspuren
- VF: Vorgewendefahrspuren
- FS: Fahrspurensystem
- EB: Einfahrbereiche
- AB: Ausfahrbereiche
- AL: Ausbringlücken

## Patentansprüche

1. Verfahren zum Ausbringen von Ausbringmaterial auf eine landwirtschaftliche Nutzfläche (N), mit den Schritten:
- Ermitteln von Ausbringeinstellungen für ein landwirtschaftliches Ausbringgerät (10) zum Anpassen einer Materialausbringung während eines Ausbringvorgangs auf einer landwirtschaftlichen Nutzfläche (N); und
- selbsttätiges Anpassen der Materialausbringung während des Ausbringvorgangs auf der landwirtschaftlichen Nutzfläche (N) durch Einstellen der ermittelten Ausbringeinstellungen an dem landwirtschaftlichen Ausbringgerät (10) durch das landwirtschaftliche Ausbringgerät (10);
**dadurch gekennzeichnet, dass** das Ermitteln von Ausbringeinstellungen für das landwirtschaftliche Ausbringgerät durch eine Berechnungseinrichtung erfolgt die folgenden Schritte umfasst:
- Empfangen von Fahrspurinformationen zu einem vorherigen Ausbringvorgang auf der landwirtschaftlichen Nutzfläche (N);
- Erfassen eines zu berücksichtigenden Fahrspurensystems (FS) auf der landwirtschaftlichen Nutzfläche (N);
- Identifizieren von Vorgewendefahrspuren (VF) innerhalb des zu berücksichtigenden Fahrspurensystems (FS) auf der landwirtschaftlichen Nutzfläche (N) und/oder
- Identifizieren von feldinneren Fahrspuren (FF) innerhalb des zu berücksichtigenden Fahrspurensystems (FS) auf der landwirtschaftlichen Nutzfläche (N)
wobei beim Ermitteln der Ausbringeinstellungen für das landwirtschaftliche Ausbringgerät (10) das sich beim Einfahren in eine und/oder Ausfahren aus einer Vorgewendefahrspur (VF) ergebende Ausschwenken des landwirtschaftlichen Ausbringgeräts (10) nach außen berücksichtigt wird.

2. Verfahren nach Anspruch 1,
**dadurch gekennzeichnet, dass** das Ermitteln der Ausbringeinstellungen für das landwirtschaftliche Ausbringgerät (10) zumindest einen der folgenden Schritte umfasst:
- Ermitteln von kurvigen Einfahrbereichen (EB) in eine Vorgewendefahrspur (VF), innerhalb welcher das landwirtschaftliche Ausbringgerät (10) nach außen ausschwenkt;
- Ermitteln von kurvigen Ausfahrbereichen (AB) aus einer Vorgewendefahrspur (VF), innerhalb welcher das landwirtschaftliche Ausbringgerät (10) nach außen ausschwenkt.

3. Verfahren nach Anspruch 2,
**dadurch gekennzeichnet, dass** das Ermitteln der Ausbringeinstellungen für das landwirtschaftliche Ausbringgerät (10) zumindest einen der folgenden Schritte umfasst:
- Ermitteln der Fahrspurradien innerhalb der Einfahrbereiche (EB) und/oder Ausfahrbereiche (AB);
- Ermitteln des zu erwartenden Ausschwenkverhaltens des landwirtschaftlichen Ausbringgeräts (10) innerhalb der ermittelten Einfahrbereiche (EB) und/oder Ausfahrbereiche (AB).

4. Verfahren nach einem der vorstehenden Ansprüche,
**dadurch gekennzeichnet, dass** das Ermitteln der Ausbringeinstellungen für das landwirtschaftliche Ausbringgerät (10) den folgenden Schritt umfasst:
- Ermitteln des potentiellen Bewegungspfads des landwirtschaftlichen Ausbringgeräts (10) auf der landwirtschaftlichen Nutzfläche (N),
wobei das Ermitteln des potentiellen Bewegungspfads des landwirtschaftlichen Ausbringgeräts (10) vorzugsweise auf Grundlage eines zu berücksichtigenden Fahrspurensystems (FS) auf der landwirtschaftlichen Nutzfläche (N) und/oder dem Ausschwenkverhalten des landwirtschaftlichen Ausbringgeräts (10) bei Kurvenfahren erfolgt.

5. Verfahren nach einem der vorstehenden Ansprüche,
**dadurch gekennzeichnet, dass** beim Ermitteln der Ausbringeinstellungen für das landwirtschaftliche Ausbringgerät (10) die sich beim Einfahren in eine und/oder Ausfahren aus einer Vorgewendefahrspur (VF) jenseits der eingestellten Ausbringbreite ergebenden Ausbringlücken (AL) berücksichtigt werden.

6. Verfahren nach einem der vorstehenden Ansprüche,
**dadurch gekennzeichnet, dass** das selbsttätige Anpassen der Materialausbringung während des Ausbringvorgangs auf der landwirtschaftlichen Nutzfläche (N) beim Durchfahren einer Vorgewendefahrspur (VF) und/oder einer feldinneren Fahrspur (FF) erfolgt und/oder die Position der Vorgewendefahrspuren (VF) und/oder der feldinneren Fahrspuren (FF) berücksichtigt.

7. Verfahren nach einem der vorstehenden Ansprüche,
**dadurch gekennzeichnet, dass** das selbsttätige Anpassen der Materialausbringung während des Ausbringvorgangs auf der landwirtschaftlichen Nutzfläche (N) zumindest einen der folgenden Schritte umfasst:
- selbsttätiges Anpassen der Arbeitsbreite des landwirtschaftlichen Ausbringgeräts (10);
- selbsttätiges Anpassen der Querverteilung des Ausbringmaterials;
- selbsttätiges Anpassen der Längsverteilung des Ausbringmaterials;
- selbsttätiges Anpassen der Ausbringrate des Ausbringmaterials;
- selbsttätiges Schalten von Teilbreiten einer Teilbreitenschaltung des landwirtschaftlichen Ausbringgeräts (10).

8. Verfahren nach einem der vorstehenden Ansprüche,
**dadurch gekennzeichnet, dass** das selbsttätige Anpassen der Materialausbringung während des Ausbringvorgangs auf der landwirtschaftlichen Nutzfläche (N) zumindest einen der folgenden Schritte umfasst:
- aktives Bewegen des landwirtschaftlichen Ausbringgeräts (10) beim Einfahren in eine und/oder Ausfahren aus einer Vorgewendefahrspur (VF) nach innen zum zumindest teilweisen Ausgleich der Ausschwenkbewegung des landwirtschaftlichen Ausbringgeräts (10) nach außen;
- aktives Bewegen von Teilen des landwirtschaftlichen Ausbringgeräts (10) beim Einfahren in eine und/oder Ausfahren aus einer Vorgewendefahrspur (VG) nach innen zum zumindest teilweisen Ausgleich der Ausschwenkbewegung des landwirtschaftlichen Ausbringgeräts (10) nach außen.

9. Verfahren nach einem der vorstehenden Ansprüche,
**gekennzeichnet durch** zumindest einen der folgenden Schritte:
- Ermitteln und/oder Aufzeichnen von Positionsdaten während eines vorherigen Ausbringvorgangs;
- Erstellen von Fahrspurinformationen auf Grundlage der ermittelten und/oder aufgezeichneten Positionsdaten;
- Kennzeichnen von einzelnen Fahrspuren als Vorgewendefahrspuren (VF) und/oder feldinnere Fahrspuren (FF).

10. Verfahren nach Anspruch 9,
**dadurch gekennzeichnet, dass** die Positionsdaten von einer Sämaschine während dem Anlegen eines Fahrspurensystems (FS) ermittelt und/oder aufgezeichnet werden.

11. Verfahren nach Anspruch 9 oder 10,
**gekennzeichnet durch** zumindest einen der folgenden Schritte:
- Senden der ermittelten und/oder aufgezeichneten Positionsdaten zu dem vorherigen Ausbringvorgang an eine zentrale Datenbank;
- Senden der erstellten Fahrspurinformationen zu dem vorherigen Ausbringvorgang an eine zentrale Datenbank.

## Claims

1. Method for applying application material to an agricultural area (N), comprising the steps of:
- determining application settings for an agricultural application device (10) for adjusting a material application during an application process on an agricultural area (N); and
- automatically adjusting the material application during the application process on the agricultural area (N) by setting the determined application settings on the agricultural application device (10) using the agricultural application device (10);
**characterized in that** determining application settings for the agricultural application device is carried out using a calculation apparatus and comprises the following steps:
- receiving track information on a previous application process on the agricultural area (N);
- detecting a track system (FS) to be taken into account on the agricultural area (N);
- identifying headland tracks (VF) within the track system (FS) to be taken into account on the agricultural area (N) and/or
- identifying field-internal tracks (FF) within the track system (FS) to be taken into account on the agricultural area (N),
the outward swinging of the agricultural application device (10) that occurs upon entry into and/or exit from a headland track (VF) is taken into account when determining the application settings for the agricultural application device (10).

2. Method according to claim 1,
**characterized in that** determining the application settings for the agricultural application device (10) comprises at least one of the following steps:
- determining curved entry regions (EB) into a headland track (VF) within which the agricultural application device (10) swings outward;
- determining curved exit regions (AB) from a headland track (VF) within which the agricultural application device (10) swings outward.

3. Method according to claim 2,
**characterized in that** determining the application settings for the agricultural application device (10) comprises at least one of the following steps:
- determining the track radii within the entry regions (EB) and/or exit regions (AB);
- determining the expected outward swinging behavior of the agricultural application device (10) within the determined entry regions (EB) and/or exit regions (AB).

4. Method according to any of the preceding claims,
**characterized in that** determining the application settings for the agricultural application device (10) comprises the following step:
- determining the potential movement path of the agricultural application device (10) on the agricultural area (N),
determining the potential movement path of the agricultural application device (10) preferably being carried out on the basis of a track system (FS) to be taken into account on the agricultural area (N) and/or the outward swinging behavior of the agricultural application device (10) when cornering.

5. Method according to any of the preceding claims,
**characterized in that** the application gaps (AL) that are produced upon entry into and/or exit from a headland track (VF) beyond the set application width are taken into account when determining the application settings for the agricultural application device (10).

6. Method according to any of the preceding claims,
**characterized in that** automatically adjusting the material application during the application process on the agricultural area (N) is carried out when a headland track (VF) and/or a field-internal track (FF) is being traveled on and/or takes into account the position of the headland tracks (VF) and/or the field-internal tracks (FF).

7. Method according to any of the preceding claims,
**characterized in that** automatically adjusting the material application during the application process on the agricultural area (N) comprises at least one of the following steps:
- automatically adjusting the working width of the agricultural application device (10);
- automatically adjusting the transverse distribution of the application material;
- automatically adjusting the longitudinal distribution of the application material;
- automatically adjusting the application rate of the application material;
- automatically switching part-width sections of a part-width control system of the agricultural application device (10).

8. Method according to any of the preceding claims,
**characterized in that** automatically adjusting the material application during the application process on the agricultural area (N) comprises at least one of the following steps:
- actively moving the agricultural application device (10) inward upon entry into and/or exit from a headland track (VF) to at least partially compensate for the outward swinging movement of the agricultural application device (10);
- actively moving parts of the agricultural application device (10) inward upon entry into and/or exit from a headland track (VG) to at least partially compensate for the outward swinging movement of the agricultural application device (10).

9. Method according to any of the preceding claims,
**characterized by** at least one of the following steps:
- determining and/or recording position data during a previous application process;
- creating track information on the basis of the determined and/or recorded position data;
- marking individual tracks as headland tracks (VF) and/or field-internal tracks (FF).

10. Method according to claim 9,
**characterized in that** the position data of a seed drill are determined and/or recorded while a track system (FS) is being established.

11. Method according to claim 9 or 10,
**characterized by** at least one of the following steps:
- sending the determined and/or recorded position data for the previous application process to a central database;
- sending the created track information for the previous application process to a central database.

## Revendications

1. Procédé pour l'épandage de matériau d'épandage sur une surface utile agricole (N) comportant les étapes consistant à :
- déterminer des réglages d'épandage pour un appareil d'épandage agricole (10) pour l'adaptation d'un épandage de matériau pendant une opération d'épandage sur une surface utile agricole (N) ; et
- adapter de manière automatique l'épandage de matériau pendant l'opération d'épandage sur la surface utile agricole (N) par réglage des réglages d'épandage déterminés sur l'appareil d'épandage agricole (10) par l'appareil d'épandage agricole (10) ;
**caractérisé en ce que** la détermination de réglages d'épandage pour l'appareil d'épandage agricole est effectuée par un dispositif de calcul et comprend les étapes suivantes :
- réception d'informations sur les voies de circulation concernant une opération d'épandage précédente sur la surface utile agricole (N) ;
- saisie d'un système de voies de circulation (FS) à prendre en compte sur la surface utile agricole (N) ;
- identification des voies de circulation en bout de champ (VF) à l'intérieur du système de voies de circulation (FS) à prendre en compte sur la surface utile agricole (N) et/ou
- identification des voies de circulation à l'intérieur du champ (FF) à l'intérieur du système de voies de circulation (FS) à prendre en compte sur la surface utile agricole (N)
dans lequel, lors de la détermination des réglages d'épandage pour l'appareil d'épandage agricole (10), le pivotement vers l'extérieur de l'appareil d'épandage agricole (10) résultant de l'entrée dans une voie de circulation en bout de champ (VF) et/ou de la sortie d'une telle voie est pris en compte.

2. Procédé selon la revendication 1,
**caractérisé en ce que** la détermination des réglages d'épandage pour l'appareil d'épandage agricole (10) comprend au moins l'une des étapes suivantes :
- détermination de zones d'entrée sinueuses (EB) dans une voie de circulation en bout de champ (VF), à l'intérieur desquelles l'appareil d'épandage agricole (10) pivote vers l'extérieur ;
- détermination de zones de sortie sinueuses (AB) à partir d'une voie de circulation en bout de champ (VF), à l'intérieur desquelles l'appareil d'épandage agricole (10) pivote vers l'extérieur.

3. Procédé selon la revendication 2,
**caractérisé en ce que** la détermination des réglages d'épandage pour l'appareil d'épandage agricole (10) comprend au moins l'une des étapes suivantes :
- détermination des rayons des voies de circulation à l'intérieur des zones d'entrée (EB) et/ou des zones de sortie (AB) ;
- détermination du comportement de pivotement attendu de l'appareil d'épandage agricole (10) à l'intérieur des zones d'entrée (EB) et/ou des zones de sortie (AB) déterminées.

4. Procédé selon l'une des revendications précédentes,
**caractérisé en ce que** la détermination des réglages d'épandage pour l'appareil d'épandage agricole (10) comprend l'étape suivante :
- détermination du chemin de déplacement potentiel de l'appareil d'épandage agricole (10) sur la surface utile agricole (N),
dans lequel la détermination du chemin de déplacement potentiel de l'appareil d'épandage agricole (10) s'effectue de préférence sur la base d'un système de voies de circulation (FS) à prendre en compte sur la surface utile agricole (N) et/ou du comportement de pivotement de l'appareil d'épandage agricole (10) lors d'un virage.

5. Procédé selon l'une des revendications précédentes,
**caractérisé en ce que,** lors de la détermination des réglages d'épandage pour l'appareil d'épandage agricole (10), on tient compte des intervalles d'épandage (AL) qui se produisent lors de l'entrée dans une voie de circulation en bout de champ (VF) et/ou de la sortie d'une telle voie au-delà de la largeur d'épandage réglée.

6. Procédé selon l'une des revendications précédentes,
**caractérisé en ce que** l'adaptation automatique de l'épandage de matériau pendant le processus d'épandage sur la surface utile agricole (N) s'effectue lors du passage d'une voie de circulation en bout de champ (VF) et/ou d'une voie de circulation à l'intérieur du champ (FF) et/ou tient compte de la position des voies de circulation en bout de champ (VF) et/ou des voies de circulation à l'intérieur du champ (FF).

7. Procédé selon l'une des revendications précédentes,
**caractérisé en ce que** l'adaptation automatique de l'épandage de matériau pendant l'opération d'épandage sur la surface utile agricole (N) comprend au moins l'une des étapes suivantes :
- adaptation automatique de la largeur de travail de l'appareil d'épandage agricole (10) ;
- adaptation automatique de la répartition transversale du matériau d'épandage ;
- adaptation automatique de la répartition longitudinale du matériau d'épandage ;
- adaptation automatique du taux d'épandage du matériau d'épandage ;
- commutation automatique de largeurs partielles d'un circuit de largeurs partielles de l'appareil d'épandage agricole (10).

8. Procédé selon l'une des revendications précédentes,
**caractérisé en ce que** l'adaptation automatique de l'épandage de matériau pendant l'opération d'épandage sur la surface utile agricole (N) comprend au moins l'une des étapes suivantes :
- déplacement actif de l'appareil d'épandage agricole (10) lors de l'entrée dans une voie de circulation en bout de champ (VF) et/ou de la sortie d'une telle voie vers l'intérieur pour la compensation au moins partielle du déplacement de pivotement vers l'extérieur de l'appareil d'épandage agricole (10) ;
- déplacement actif de parties de l'appareil d'épandage agricole (10) lors de l'entrée dans une voie de circulation en bout de champ (VG) et/ou de la sortie d'une telle voie vers l'intérieur pour la compensation au moins partielle du déplacement de pivotement vers l'extérieur de l'appareil d'épandage agricole (10).

9. Procédé selon l'une des revendications précédentes,
**caractérisé par** au moins l'une des étapes suivantes :
- détermination et/ou enregistrement de données de position pendant une opération de distribution précédente ;
- création d'informations sur les voies de circulation sur la base des données de position déterminées et/ou enregistrées ;
- marquage de certaines voies de circulation comme voies de circulation en bout de champ (VF) et/ou voies de circulation à l'intérieur du champ (FF).

10. Procédé selon la revendication 9,
**caractérisé en ce que** les données de position sont déterminées et/ou enregistrées par un semoir pendant la mise en place d'un système de voies de circulation (FS).

11. Procédé selon la revendication 9 ou 10,
**caractérisé par** au moins l'une des étapes suivantes :
- envoi des données de position déterminées et/ou enregistrées concernant l'opération d'épandage précédente vers une base de données centrale ;
- envoi à une base de données centrale des informations sur les voies de circulation créées pour l'opération d'épandage précédente.
